# EUROPÄISCHE PATENTSCHRIFT

(11) **EP 2 555 367 B1**
(45) Veröffentlichungstag und Bekanntmachung des Hinweises auf die Patenterteilung: **27.04.2016**
(21) Anmeldenummer: 12171572.6
(22) Anmeldetag: 12.06.2012
(51) Int. Cl.: H02H 1/00, H02H 3/20

(54) **Störlichtbogenschutzschalter mit Überspannungsschutz**
Arc fault protective circuit with excess voltage protection
Commutateur de sécurité contre les arcs de lumière parasite avec protection contre les surtensions

(30) Priorität: 05.08.2011 DE 102011080523
(43) Veröffentlichungstag der Anmeldung: 06.02.2013
(73) Patentinhaber: Siemens Aktiengesellschaft, 80333 München (DE)
(72) Erfinder: Hueber, Alexander, 84085 Niederleierndorf (DE); Martel, Jean-Mary, 93105 Tegernheim (DE)

(56) Entgegenhaltungen:
- EP-A1- 0 349 750
- WO-A2-2008/005709
- US-A1- 2008 204 950

## Beschreibung

Die vorliegende Erfindung betrifft einen Störlichtbogenschutzschalter zum Schutz vor Lichtbögen in einem Stromkreis, zu welchem Zweck hochfrequente Signalanteile überwacht werden, mit einer Signaleingangseinrichtung, an die eine zu überwachende Leitung anschließbar ist, zum Liefern eines Eingangssignals von der Leitung, einer Auswerteeinrichtung zum Auswerten des Eingangssignals hinsichtlich der Präsenz eines Störlichtbogens und einer Auslöseeinrichtung zum Unterbrechen der zu überwachenden Leitung auf der Basis eines Auslösesignals von der Auswerteeinrichtung.

Ein Lichtbogen kann in einem Stromkreis beispielsweise auftreten, wenn ein Lichtschalter defekt ist und der Abstand zwischen zwei Kontakten des Lichtschalters zu klein ist, als dass der Stromfluss unterbrochen werden könnte. Dann bildet sich zwischen den zwei Kontakten ein Lichtbogen aus. Neben einem im Stromkreis in Serie sich ausbildenden Lichtbogen kann der Lichtbogen auch zwischen Phase und Neutralleiter des Stromkreises entstehen. Treten Lichtbögen auf, so erhöht sich die Temperatur der umliegenden Bauteile, und es kann ein Brand entstehen.

Es ist daher sinnvoll, eine Einrichtung bereitzustellen, mit der ein Schutz vor Lichtbögen gewährleistet ist. Es wurden hierzu so genannte Störlichtbogenschutzschalter (AFDD = Arc Fault Detection Devices) entwickelt, die serielle und parallele Störlichtbögen in einer Niederspannungs-Installation erkennen und abschwächen können. Diese Geräte überwachen hochfrequente Signalanteile, die Leitungsspannung und den Laststrom mittels komplexer analoger Schaltungen und/oder Signalprozessoren.

Da Störlichtbogenschutzschalter zum Schutz von Abzweigeschaltungen verwendet werden, die mit einer Spannung von 230 Vac versorgt werden, können diese Gerät Überspannungen ausgesetzt sein, die durch eine Störung in einem Drei-Phasen-System oder in einem Verteilertransformator stromaufwärts entstehen. Die Leitungsspannung kann dabei im Störungsfall bis zu 400 Vac betragen.

Die Elektronik eines Störlichtbogenschutzschalters erfordert eine ausreichende DC-Stromversorgung im Bereich von 10 mA bis 50 mA und ein Netzteil, das diesen Strom bei geringer DC-Spannung bereitstellen kann.

Viele Sensoren des Störlichtbogenschutzschalters wie die Hochfrequenztransformatoren zur Aufnahme von HF-Anteilen und Stromwandler zum Messen von Strömen oder Spannungen sind direkt an den Phasen- und Neutralleiter der Abzweigschaltung angeschlossen. Sie können damit der Überspannung ausgesetzt sein. Auch ein Thyristor, der üblicherweise zur Ansteuerung eines Magnetschalters und zum Auslösen eines Auslösemechanismus des Störlichtbogenschutzschalters verwendet wird, ist direkt mit Teilen verbunden, an denen Spannung anliegt. All diese Bauelemente sind ggf. einer Überspannung ausgesetzt.

Es ist teuer und daher auch unüblich, Spannungsversorgungskomponenten, Sensoren und Thyristoren einzusetzen, die derartigen Überspannungen widerstehen können. Es müssten dann Komponenten mit höherer Nennspannung eingesetzt werden, die zum einen teurer sind und zum anderen größere Dimensionen aufweisen.

Die WO 2008/005709 A2 offenbart einen Fehlerstromschutzschalter, der eine Überspannungsschutzschaltung aufweist.

Die US 2008/0204950 A1 offenbart einen Störlichtbogenschutzschalter, der hochfrequente Signalanteile zur Ermittlung von Störlichtbögen nutzt.

Die EP 0 349 750 A1 offenbart eine Ausgleichs- und Überspannungsschutzschaltung für elektronische Geräte.

Auf dem amerikanischen Markt finden sich Störlichtbogenschutzschalter (AFCI = Arc Fault Circuit Interrupter), die bei 120 Vac arbeiten und üblicherweise bis zu 240 Vac aushalten, was von einer Störung in einem Zwei-Phasen-System herrühren kann. Auch Fehlerstromschutzschalter (RCD = Residual Current Device) sind mit dem gleichen Problem konfrontiert. Einige können die Überspannung aufnehmen, und andere sind mit einem zusätzlichen Überspannungsschutz ausgerüstet, der zusätzliche Kosten verursacht.

Aus der Druckschrift DE 10 2008 004 869 A1 ist ein Lichtbogenschutzmodul für die europäische IEC-Technik bekannt. Das Modul weist Mittel zum Erfassen auf, ob ein Lichtbogen in dem Stromkreis aufgetreten ist. Weiterhin besitzt das Modul keine eigenen Trennkontakte, sondern vielmehr Mittel zum Veranlassen des Öffnens der Trennkontakte eines ohnehin in dem Stromkreis angeordneten Schutzschalters.

Die Aufgabe der vorliegenden Erfindung besteht darin, einen Störlichtbogenschutzschalter und den Stromkreis, den er überwacht auf einfache Weise gegen Überspannungen zu schützen.
- Erfindungsgemäß wird diese Aufgabe gelöst durch einen Störlichtbogenschutzschalter nach Anspruch 1.

In vorteilhafter Weise wird also der Störlichtbogenschutzschalter durch einen Spannungswandler ergänzt, der die Spannung an einer zu überwachenden Leitung reduziert, sodass sie für eine konventionell ausgelegte Elektronik eines Störlichtbogenschutzschalters auswertbar ist. Die Auswerteeinrichtung des Störlichtbogenschutzschalters kann auch dann dafür benutzt werden, im Falle einer Überspannung die Auslöseeinrichtung auszulösen.

Vorzugsweise wird der Spannungswandler durch einen Spannungsteiler realisiert. Ein Spannungsteiler ist sehr günstig herstellbar, sodass die Kosten für den Störlichtbogenschutzschalter niedrig gehalten werden können.

Insbesondere kann der Spannungsteiler ohmsche Widerstände aufweisen. Ohmsche Widerstände sind besonders günstig in der Herstellung.

Die Ausgangsspannung des Spannungswandlers kann weniger als 5%, insbesondere beispielsweise 0,5%, der Eingangsspannung des Spannungswandlers betragen. Die Ausgangsspannungen liegen dann üblicherweise im niedrigen einstelligen Voltbereich, der durch konventionelle Elektronik leicht abtastbar ist.

Die Auswerteeinrichtung kann einen Eingang mit A/D-Wandler aufweisen, an den das Ausgangssignal des Spannungswandlers geführt ist. Somit können für die Auswertung digitale Prozessoren verwendet werden, die gängigerweise in Störlichtbogenschutzschaltern ohnehin vorhanden sind.

Darüber hinaus kann die Auswerteeinrichtung das Ausgangssignal des Spannungswandlers mehrfach abtasten und aus den mehreren Abtastwerten einen Mittelwert bilden. Damit kann sichergestellt werden, dass nicht kurze Messspitzen zu einem Auslösen des Störlichtbogenschutzschalters aufgrund einer Überspannung führen.

Des Weiteren kann die Signaleingangseinrichtung ein Netzteil mit Gleichrichter aufweisen. Dieses Netzteil kann insbesondere zur Stromversorgung der Auswerteeinrichtung eingesetzt werden.

Gemäß einer speziellen Ausführungsform wertet die Auswerteeinrichtung das Ausgangssignal bzgl. Spannung und Zeit aus, und sie steuert die Auslöseeinrichtung zum Trennen der Leitung, wenn die gemessene Spannung für eine vorbestimmte Zeit über einem vorgegebenen Schwellwert liegt. Damit wird dem Umstand Rechnung getragen, dass die Bauelemente des Störlichtbogenschutzschalters für eine gewisse Dauer einer Überspannung ausgesetzt sein können, ohne Schaden zu nehmen.

Hierbei ist es besonders vorteilhaft, wenn die vorbestimmte Zeit von dem vorgegebenen Schwellwert abhängt. Es ist daher eine zeitabhängige Funktion für das Auslösen des Störlichtbogenschutzschalters aufgrund einer Überspannung maßgeblich.

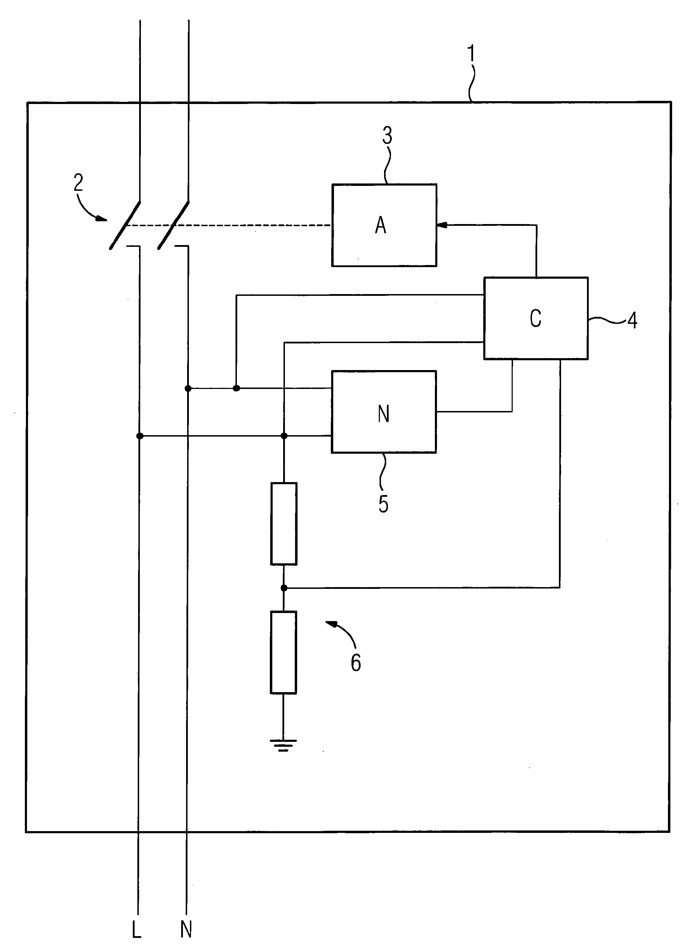

Die vorliegende Erfindung wird nun anhand der beigefügten Zeichnung näher erläutert, die ein Prinzipschaltbild eines erfindungsgemäßen Störlichtbogenschutzschalters mit Überspannungsschutz zeigt.

Die nachfolgend näher geschilderten Ausführungsbeispiele stellen bevorzugte Ausführungsformen der vorliegenden Erfindung dar.

In der Figur ist ein Störlichtbogenschutzschalter 1 schematisch wiedergegeben. Er dient zum Auftrennen eines Phasenleiters L und eines Nullleiters N. Die Leiter L und N können unter Umständen auch Teil eines Drei-Phasen-Systems sein. Das Auftrennen der beiden Leiter L und N erfolgt durch einen gemeinsamen Schalter 2, der in den Störlichtbogenschutzschalter 1 integriert ist. Angesteuert wird der Schalter 2 durch eine Auslöseeinrichtung (A) 3. Die Auslöseeinrichtung 3 wird in üblicherweise von einem Controller (C) bzw. einer Auswerteeinrichtung 4 angesteuert.

Die Auswerteeinrichtung 4 ist an die Leiter L und N angeschlossen, um entsprechende Spannungen bzw. Ströme auszuwerten. Insbesondere werden beispielsweise Hochfrequenzkomponenten in den Signalen ausgewertet, um auf Störlichtbögen schließen zu können.

Darüber hinaus beinhaltet der Störlichtbogenschutzschalter 1 ein Netzteil (N) 5, das ebenfalls an die Leiter L und N angeschlossen ist. Das Netzteil 5 richtet den Wechselstrom in dem Leiter L gleich und versorgt die Auswerteeinrichtung 4 mit Gleichstrom.

Um nun auch einen Überspannungsschutz bereitzustellen, wird der Störlichtbogenschutzschalter zusätzlich mit einer entsprechenden Schutzkomponente versehen. Da der Störlichtbogenschutzschalter bereits in der Auswerteeinrichtung 4 üblicherweise einen Prozessor oder eine ähnliche Komponente enthält, mit dem/der eine Signalanalyse durchgeführt und Lichtbögen detektiert werden, sind nur wenige zusätzliche Mittel notwendig, um die Leitungsspannung zu messen und die Auslöseeinrichtung 3 des Störlichtbogenschutzschalters zu betätigen, wenn die Leitungsspannung einen vorbestimmten Schwellwert übersteigt. Es ist also keine vollständige zusätzliche Analyseeinheit notwendig, um neben der Störlichtbogenerfassung auch Überspannungen zu erfassen.

Da gängige Prozessoren nur verhältnismäßig geringe Eingangsspannungen aufweisen, und mit dem vorliegenden Störlichtbogenschutzschalter Spannungen im Bereich bis zu beispielsweise 400 V gemessen werden sollen, muss die Erfassungseinheit für das Erkennen einer Überspannung einen Spannungswandler aufweisen, der die zu überwachende Spannung in geeigneter Weise herabsetzt. Als Spannungswandler kann gemäß dem Beispiel der Figur ein einfacher Spannungsteiler 6 verwendet werden. Der Spannungsteiler 6 kann insbesondere rein aus ohmschen Widerständen aufgebaut sein. Für die vorliegende Anwendung (Leitungsspannungen bis etwa 400 V) ist es günstig, die zu messende Spannung auf etwa 0,5% des realen Werts zu reduzieren. Der Spannungsteiler ist entsprechend auszulegen. Die gleichgerichtete Spannung am Ausgang des Netzteils wird verwendet, um einen zusätzlichen Gleichrichter einzusparen. Das so aufbereitete Signal wird zur Abtastung und Analyse an einen Eingang der Auswerteeinrichtung 4 (insbesondere Mikrocontroller) mit Analog-Digital-Wandler geschickt.

Die Auswerteeinrichtung 4 führt eine Vielzahl an Abtastungen durch, berechnet einen Durchschnittswert für die Spannung, extrapoliert den realen Leitungsspannungswert und entscheidet dann, ob der Störlichtbogenschutzschalter ausgelöst werden soll oder nicht.

Als Auslösekriterium kann in der Auswerteeinrichtung 4 eine Spannung-Zeit-Charakteristik hinterlegt sein, wie sie auch in einem so genannten "POP" (Permanent Overvoltage Protection) als Auslösekriterium verwendet wird. Demnach wird beispielsweise bei einer höheren Überspannung früher ausgelöst als bei einer niedrigeren Überspannung.

In dem vorliegenden Fall besitzt also der Störlichtbogenschutzschalter einen Überspannungsschutz der es ermöglicht, Komponenten mit geringen Spannungsnennwerten auch zur Erfassung von Überspannungen zu nutzen und für den Anwender so ein zusätzliches Leistungsmerkmal zu bieten. Somit werden die Komponenten des Netzes nur in einem begrenzten Zeitraum der Überspannung ausgesetzt, wobei die Robustheit dieser Komponenten gegenüber solchen Kurzzeitbelastungen gewährleistet sein muss.

In vorteilhafter Weise müssen bei der erfindungsgemäßen Lösung keine Komponenten für erhöhte Spannungsnennwerte vorgesehen werden. Dies spart Kosten und Bauraum. Der Störlichtbogenschutzschalter wird also mit einem zusätzlichen Merkmal des permanenten Überspannungsschutzes ausgestattet. Die zusätzlichen Maßnahmen, um dieses Merkmal zu realisieren, sind minimal. Es müssen nämlich nur zusätzlich kostengünstige Widerstände für einen Spannungsteiler vorgesehen werden, und die Rechenkapazitäten des Störlichtbogenschutzschalters können für den Überspannungsschutz mitgenutzt werden.

## Patentansprüche

1. Störlichtbogenschutzschalter (1) zum Schutz vor Lichtbögen in einem Stromkreis, zu welchem Zweck hochfrequente Signalanteile überwacht werden, mit
- einer Signaleingangseinrichtung, an die eine zu überwachende Leitung (L, N) anschließbar ist, zum Liefern eines Eingangssignals von der Leitung,
- einer Auswerteeinrichtung (4) zum Auswerten des Eingangssignals hinsichtlich der Präsenz eines Störlichtbogens und
- einer Auslöseeinrichtung (3) zum Unterbrechen der zu überwachenden Leitung auf der Basis eines Auslösesignals von der Auswerteeinrichtung (4),
**dadurch gekennzeichnet, dass**
- die Signaleingangseinrichtung einen Spannungswandler (6) zum Reduzieren der Spannung an der zu überwachenden Leitung aufweist,
- das Ausgangssignal des Spannungswandlers (6) zu der Auswerteeinrichtung (4) geleitet wird und
- die Auswerteeinrichtung (4) das Ausgangssignal hinsichtlich einer Überspannung analysiert und die Auslöseeinrichtung (3) entsprechend ansteuert.

2. Störlichtbogenschutzschalter nach Anspruch 1, wobei der Spannungswandler (6) ein Spannungsteiler ist.

3. Störlichtbogenschutzschalter nach Anspruch 2, wobei der Spannungsteiler ohmsche Widerstände aufweist.

4. Störlichtbogenschutzschalter nach einem der vorhergehenden Ansprüche, wobei die Ausgangsspannung des Spannungswandlers (6) weniger als 1% der Eingangsspannung des Spannungswandlers beträgt.

5. Störlichtbogenschutzschalter nach einem der vorhergehenden Ansprüche, wobei die Auswerteeinrichtung (4) einen Eingang mit A/D-Wandler aufweist, an den das Ausgangssignal des Spannungswandlers geführt ist.

6. Störlichtbogenschutzschalter nach einem der vorhergehenden Ansprüche, wobei die Auswerteeinrichtung (4) das Ausgangssignal des Spannungswandlers (6) mehrfach abtastet und aus den mehreren Abtastwerten einen Mittelwert bildet.

7. Störlichtbogenschutzschalter nach einem der vorhergehenden Ansprüche, wobei die Signaleingangseinrichtung ein Netzteil (5) zum Anschließen an ein drei-phasiges Netz aufweist.

8. Störlichtbogenschutzschalter nach Anspruch 7, wobei das Netzteil (5) die Auswerteeinrichtung (4) mit Strom versorgt.

9. Störlichtbogenschutzschalter nach einem der vorhergehenden Ansprüche, wobei die Auswerteeinrichtung (4) das Ausgangssignal des Spannungswandlers (6) bezüglich Spannung und Zeit auswertet und die Auslöseeinrichtung (3) zum Trennen der Leitung (L, N) ansteuert, wenn die gemessene Spannung für eine vorbestimmte Zeit über einem vorgegebenen Schwellwert liegt.

10. Störlichtbogenschutzschalter nach einem der vorhergehenden Ansprüche, wobei die vorbestimmte Zeit von dem vorgegebenen Schwellwert abhängt.

## Claims

1. Arc-fault circuit-breaker (1) for protection against arc faults in an electric circuit, for which purpose high-frequency signal components are monitored, comprising
- a signal input device, to which a line (L, N) to be monitored can be connected, for the purpose of supplying an input signal from the line,
- an evaluation device (4) for evaluating the input signal with regard to the presence of an arc fault, and
- a triggering device (3) for interrupting the line to be monitored on the basis of a triggering signal from the evaluation device (4),
**characterized in that**
- the signal input device has a voltage converter (6) for reducing the voltage on the line to be monitored,
- the output signal of the voltage converter (6) is passed to the evaluation device (4), and
- the evaluation device (4) analyses the output signal with regard to an overvoltage and correspondingly drives the triggering device (3).

2. Arc-fault circuit-breaker according to Claim 1, wherein the voltage converter (6) is a voltage divider.

3. Arc-fault circuit-breaker according to Claim 2, wherein the voltage divider has ohmic resistors.

4. Arc-fault circuit-breaker according to any of the preceding claims, wherein the output voltage of the voltage converter (6) is less than 1% of the input voltage of the voltage converter.

5. Arc-fault circuit-breaker according to any of the preceding claims, wherein the evaluation device (4) has an input with A/D converter, to which the output signal of the voltage converter is led.

6. Arc-fault circuit-breaker according to any of the preceding claims, wherein the evaluation device (4) samples the output signal of the voltage converter (6) a number of times and forms an average value from the plurality of samples.

7. Arc-fault circuit-breaker according to any of the preceding claims, wherein the signal input device has a power supply unit (5) for connection to a three-phase power supply system.

8. Arc-fault circuit-breaker according to Claim 7, wherein the power supply unit (5) supplies the evaluation device (4) with current.

9. Arc-fault circuit-breaker according to any of the preceding claims, wherein the evaluation device (4) evaluates the output signal of the voltage converter (6) with regard to voltage and time and drives the triggering device (3) for disconnecting the line (L, N) if the measured voltage lies above a predefined threshold value for a predetermined time.

10. Arc-fault circuit-breaker according to any of the preceding claims, wherein the predetermined time is dependent on the predefined threshold value.

## Revendications

1. Commutateur de sécurité contre les arcs de lumière parasite (1) pour la protection contre les arcs de lumière dans un circuit électrique, dans le but que des fractions de signaux à haute fréquence soient surveillées, avec
- un dispositif d'entrée de signal, auquel peut être raccordé une ligne à surveiller (L, N), pour la fourniture d'un signal d'entrée provenant de la ligne,
- un dispositif d'évaluation (4) pour l'évaluation du signal d'entrée en ce qui concerne la présence d'un arc de lumière parasite et
- un dispositif de déclenchement (3) pour l'interruption de la ligne à surveiller sur la base d'un signal de déclenchement provenant du dispositif d'évaluation (4), **caractérisé en ce que**
- le dispositif d'entrée de signal présente un transformateur de tension (6) pour la réduction de la tension au niveau de la ligne à surveiller,
- le signal de sortie du convertisseur de tension (6) est dirigé vers le dispositif d'évaluation (4) et
- le dispositif d'évaluation (4) analyse le signal de sortie en ce qui concerne une surtension et commande de manière correspondante le dispositif de déclenchement (3).

2. Commutateur de sécurité contre les arcs de lumière parasite selon la revendication 1, dans lequel le convertisseur de tension (6) est un diviseur de tension.

3. Commutateur de sécurité contre les arcs de lumière parasite selon la revendication 2, dans lequel le diviseur de tension présente des résistances ohmiques.

4. Commutateur de sécurité contre les arcs de lumière parasite selon l'une des revendications précédentes, dans lequel la tension de sortie du transformateur de tension (6) s'élève à moins de 1 % de la tension d'entrée du convertisseur de tension.

5. Commutateur de sécurité contre les arcs de lumière parasite selon l'une des revendications précédentes, dans lequel le dispositif d'évaluation (4) présente une entrée avec un convertisseur A/N, auquel est amené le signal de sortie du convertisseur de tension.

6. Commutateur de sécurité contre les arcs de lumière parasite selon l'une des revendications précédentes, dans lequel le dispositif d'évaluation (4) analyse plusieurs fois le signal de sortie du convertisseur de tension (6) et forme une valeur moyenne à partir de la pluralité de valeurs d'analyse.

7. Commutateur de sécurité contre les arcs de lumière parasite selon l'une des revendications précédentes, dans lequel le dispositif d'entrée de signal présente un bloc d'alimentation (5) pour le raccordement à un réseau triphasé.

8. Commutateur de sécurité contre les arcs de lumière parasite selon la revendication 7, dans lequel le bloc d'alimentation (5) alimente en courant le dispositif d'évaluation (4).

9. Commutateur de sécurité contre les arcs de lumière parasite selon l'une des revendications précédentes, dans lequel le dispositif d'évaluation (4) exploite le signal de sortie du convertisseur de tension (6) en ce qui concerne la tension et la durée et commande le dispositif de déclenchement (3) pour la séparation de la ligne (L, N), lorsque la tension mesurée pour une durée prédéterminée se situe au-dessus d'une valeur seuil prédéfinie.

10. Commutateur de sécurité contre les arcs de lumière parasite selon l'une des revendications précédentes, dans lequel la durée prédéterminée dépend de la valeur seuil prédéfinie.
